(19) 
Europäisches
Patentamt
European
Patent Office
Office européen
des brevets

(11)  **EP 4 096 316 A1**

(12)  **EUROPEAN PATENT APPLICATION**
published in accordance with Art. 153(4) EPC

(43)  Date of publication:
**30.11.2022  Bulletin 2022/48**

(21)  Application number: **20915193.5**

(22)  Date of filing: **24.01.2020**

(51)  International Patent Classification (IPC):
**H04W 72/04** *(2009.01)*        **H04W 28/06** *(2009.01)*
**H04W 28/16** *(2009.01)*

(52)  Cooperative Patent Classification (CPC):
**H04W 28/06; H04W 28/16; H04W 72/04**

(86)  International application number:
**PCT/JP2020/002636**

(87)  International publication number:
**WO 2021/149265 (29.07.2021 Gazette 2021/30)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71)  Applicant: **NTT DOCOMO, INC.**
**Chiyoda-Ku
Tokyo 100-6150 (JP)**

(72)  Inventors:
• **MATSUMURA, Yuki
Tokyo 100-6150 (JP)**

• **NAGATA, Satoshi
Tokyo 100-6150 (JP)**
• **GUO, Shaozhen
Beijing 100190 (CN)**
• **WANG, Jing
Beijing 100190 (CN)**
• **HOU, Xiaolin
Beijing 100190 (CN)**

(74)  Representative: **Hoffmann Eitle
Patent- und Rechtsanwälte PartmbB
Arabellastraße 30
81925 München (DE)**

(54)  **TERMINAL, WIRELESS COMMUNICATION METHOD, AND BASE STATION**

(57)  A terminal according to one aspect of the present disclosure includes a control section that, when more than two sounding reference signal (SRS) resources for codebook-based transmission or more than four SRS resources for non-codebook-based transmission are configured, determines a size of an SRS resource indicator (SRI) field in downlink control information to indicate the transmission, and a transmitting section that performs the transmission on the basis of an SRS resource indicated by the SRI field. According to one aspect of the present disclosure, it is possible to appropriately designate an SRS spatial relation.

| Bit field mapped to index | SRI(s) |
|---|---|
| 0 | 0 |
| 1 | 1 |
| ... | ... |
| $N_{SRS} - 1$ | $N_{SRS} - 1$ |

FIG. 2

**EP 4 096 316 A1**

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, NR), a user terminal (User Equipment (UE)) controls transmission processing (for example, at least one of transmission, mapping, precoding, modulation, and coding) for an uplink channel, signal, or the like on the basis of a spatial relation.

In Rel. 15 NR, configuration information about a sounding reference signal (SRS) resource configured for the UE includes spatial relation information (which may be referred to as SRI). In other words, the SRS resource and the spatial relation are configured by being associated with each other in one-to-one correspondence. However, in NR of Rel. 16 or later versions, it is required that the spatial relation be dynamically changed for an SRS.

Thus, an object of the present disclosure is to provide a terminal, a radio communication method, and a base station that can appropriately designate an SRS spatial relation.

Solution to Problem

A terminal according to one aspect of the present disclosure includes a control section that, when more than two sounding reference signal (SRS) resources for codebook-based transmission or more than four SRS resources for non-codebook-based transmission are configured, determines a size of an SRS resource indicator (SRI) field in downlink control information to indicate the transmission, and a transmitting section that performs the transmission on the basis of an SRS resource indicated by the SRI field.

Advantageous Effects of Invention

According to one aspect of the present disclosure, it is possible to appropriately designate an SRS spatial relation.

Brief Description of Drawings

FIG. 1 is a diagram to show an example of SRS spatial relation information;
FIG. 2 is a diagram to show an example of SRI indication for codebook-based transmission in Embodiment 1.1;
FIG. 3 is a diagram to show an example of SRI indication for non-codebook-based transmission and $L_{max} = 1$ in

Embodiment 1.1;

FIG. 4 is a diagram to show an example of SRI indication for non-codebook-based transmission and $L_{max}$ = 2 in Embodiment 1.1;

FIGS. 5A and 5B are diagrams to show an example of reduction in an SRI field size in Embodiment 1.1;

FIGS. 6A and 6B are diagrams to show examples of SRS resource IDs configured for a plurality of SRS resource sets in Embodiment 1.2;

FIG. 7 is a diagram to show an example of SRI indication for codebook-based transmission in a case where SRS resource IDs are unique through a plurality of SRS resource sets;

FIGS. 8A and 8B are diagrams to show examples of SRI indication for codebook-based transmission in a case where SRS resource IDs are shared through a plurality of SRS resource sets;

FIGS. 9A to 9C are diagrams to show examples of correspondence of an SRI field and an SRSI field;

FIGS. 10A and 10B are diagrams to show examples of reduction in an SRSI field size in Embodiment 1.2;

FIG. 11 is a diagram to show an example of configuration information about an SRS spatial relation according to a second embodiment;

FIGS. 12A and 12B are diagrams to show examples of a MAC CE for an update of a P-SRS spatial relation according to a third embodiment;

FIG. 13 is a diagram to show an example of a schematic structure of a radio communication system according to one embodiment;

FIG. 14 is a diagram to show an example of a structure of a base station according to one embodiment;

FIG. 15 is a diagram to show an example of a structure of a user terminal according to one embodiment; and

FIG. 16 is a diagram to show an example of a hardware structure of the base station and the user terminal according to one embodiment.

Description of Embodiments

(SRS)

In NR, a reference signal for measurement (Sounding Reference Signal (SRS)) has a wide range of usage. SRSs for NR are used for not only CSI measurement for uplink (UL) also used in existing LTE (LTE Rel. 8 to Rel. 14), but also CSI measurement for downlink (DL), beam management, and the like.

One or a plurality of SRS resources may be configured for a UE. The SRS resource may be identified by an SRS resource index (SRI).

Each SRS resource may have one or a plurality of SRS ports (may correspond to one or a plurality of SRS ports). For example, the number of ports for each SRS may be 1, 2, 4, or the like.

One or a plurality of SRS resource sets may be configured for the UE. One SRS resource set may be related to a certain number of SRS resources. The UE may commonly use a higher layer parameter with respect to SRS resources included in one SRS resource set. Note that a resource set in the present disclosure may be interpreted as a set, a resource group, a group, or the like.

Information related to an SRS resource or a resource set may be configured for the UE with use of higher layer signaling or physical layer signaling or a combination of these.

Note that, in the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

SRS configuration information (for example, an RRC information element "SRS-Config") may include SRS resource set configuration information, SRS resource configuration information, and the like.

The SRS resource set configuration information (for example, an RRC parameter "SRS-ResourceSet") may include an SRS resource set ID (Identifier) (SRS-ResourceSetId), a list of SRS resource IDs (SRS-ResourceId) used in the resource set, an SRS resource type, and information about SRS usage.

Here, the SRS resource type may indicate any one of a periodic SRS (P-SRS), a semi-persistent SRS (SP-SRS), and aperiodic SRS (Aperiodic SRS (A-SRS)). Note that the UE may periodically (or, after activation, periodically) transmit the P-SRS and SP-SRS. The UE may transmit the A-SRS on the basis of an SRS request from DCI.

The SRS usage (an RRC parameter "usage" or an L1 (Layer-1) parameter "SRS-SetUse") may be, for example, beam management, codebook, non-codebook, antenna switching, or the like. For example, an SRS for codebook or non-codebook usage may be used for determination of a precoder for codebook-based or non-codebook-based uplink shared channel (Physical Uplink Shared Channel (PUSCH)) transmission based on the SRI.

For an SRS for beam management usage, it may be assumed that only one SRS resource with respect to each SRS resource set can be transmitted in a certain time instant. Note that when a plurality of SRS resources each belong to a different SRS resource set, these SRS resources may be transmitted at the same time.

The SRS resource configuration information (for example, an RRC parameter "SRS-Resource") may include an SRS resource ID (SRS-ResourceId), the number of SRS ports, an SRS port number, a transmission Comb, SRS resource mapping (for example, time and/or frequency resource location, resource offset, resource periodicity, the number of repetitions, the number of SRS symbols, an SRS bandwidth, or the like), hopping-related information, an SRS resource type, a sequence ID, spatial relation information ("SRS-SpatialRelationInfo"), or the like.

For each slot, the UE may switch a BWP (Bandwidth Part) for transmitting an SRS, or may switch an antenna. The UE may apply at least one of intra-slot hopping and inter-slot hopping to SRS transmission.

(Spatial Relation)

In NR, the UE controls transmission processing (for example, at least one of transmission, mapping, precoding, modulation, and coding) for at least one of an uplink channel and signal (which may be represented as a "channel/signal;" hereinafter, in a similar manner, "A/B" may be interpreted as "at least one of A and B") on the basis of a certain spatial relation.

Note that the spatial relation may be interpreted as quasi-co-location (QCL), QCL assumption, a Transmission Configuration Indication state (TCI state), a beam, and so on.

The spatial relation applied to a certain channel/signal may be identified by spatial relation information (SRI) notified (configured) with use of higher layer signaling. SRS spatial relation information (for example, an RRC parameter "spatialRelationInfo") may indicate information about a spatial relation between a certain reference signal (RS) and an SRS.

The certain reference signal may be at least one of a synchronization signal block (SSB), a channel state information-reference signal (CSI-RS), and a sounding reference signal (SRS). Here, the SSB may be referred to as a synchronization signal/broadcast channel (Synchronization Signal/Physical Broadcast Channel (SS/PBCH)) block.

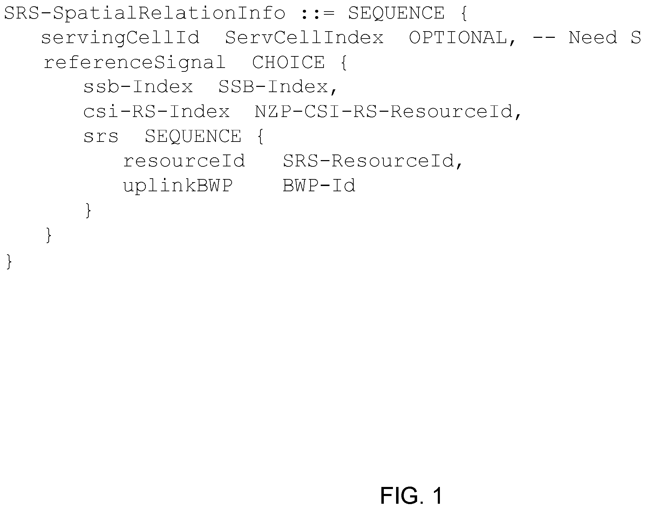

FIG. 1 is a diagram to show an example of the SRS spatial relation information. FIG. 1 is described with use of ASN.1 (Abstract Syntax Notation One) notation (note that FIG. 1 is just an example, and thus is not perfectly described).

In the present example, the SRS spatial relation information (for example, an RRC IE "SRS-SpatialRelationInfo") may include, as an index of the above-described certain reference signal (reference RS (parameter "referenceSignal")), at least one of an SSB index, a CSI-RS resource ID, and an SRS resource ID.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may also be interchangeably interpreted. An SRS index, an SRS resource ID, and an SRI may also be interchangeably interpreted.

The SRI to be configured may include, as the index of the above-described certain RS, at least one of the SSB index, the CSI-RS resource ID, and the SRS resource ID. The SRI may also include a serving cell index, a bandwidth part (BWP) ID, or the like corresponding to the above-described certain RS.

Note that, in the present disclosure, an index, an ID, an indicator, a resource ID, and the like may be interchangeably interpreted.

With respect to a certain SRS resource, when spatial relation information related to an SSB or CSI-RS and an SRS is configured for the UE, the UE may transmit the SRS resource by using the same spatial domain filter as a spatial domain filter for reception of the SSB or CSI-RS. In other words, in this case, the UE may assume that a UE receive beam for the SSB or CSI-RS and a UE transmit beam for the SRS are the same.

With respect to a certain SRS (target SRS) resource, when spatial relation information related to another SRS (reference SRS) and the SRS (target SRS) is configured for the UE, the UE may transmit the target SRS resource by using the same spatial domain filter as a spatial domain filter for transmission of the reference SRS. In other words, in this case, the UE may assume that a UE transmit beam for the reference SRS and a UE transmit beam for the target SRS are the same.

Note that a spatial domain filter for transmission by a base station, a downlink spatial domain transmit filter (downlink spatial domain transmission filter), and a transmit beam of the base station may be interchangeably interpreted. A spatial domain filter for reception by the base station, an uplink spatial domain receive filter, and a receive beam of the base station may be interchangeably interpreted.

A spatial domain filter for transmission by the UE, an uplink spatial domain transmit filter (uplink spatial domain transmission filter), and a transmit beam of the UE may be interchangeably interpreted. A spatial domain filter for reception by the UE, a downlink spatial domain receive filter, and a receive beam of the UE may be interchangeably interpreted.

Note that the spatial relation information (SRI) may correspond to a beam. For example, the UE may assume that UL transmission corresponding to different SRI is transmitted with use of a different beam.

Beam indication for an uplink control channel (Physical Uplink Control Channel (PUCCH)) may be configured by higher layer signaling. For example, when PUCCH spatial relation information includes one spatial relation information (SpatialRelationInfo) parameter, the UE may apply the configured parameter to the PUCCH. When the PUCCH spatial relation information includes more than one spatial relation information parameter, the UE may determine, on the basis of a MAC CE, a parameter to be applied to the PUCCH (in other words, to be activated).

Note that the PUCCH spatial relation information may be information obtained by interpreting "SRS" as "PUCCH" in the above-mentioned SRS spatial relation information, and thus descriptions will not be repeated.

Beam indication for a PUSCH may be judged on the basis of an SRI (SRS Resource Indicator) field included in DCI. The UE may transmit the PUSCH on the basis of designated SRI by using the same transmit beam as a corresponding SRS out of SRSs configured by a higher layer. Note that this may similarly apply to beam indication for an SRS.

For example, the UE for which codebook-based PUSCH transmission has been configured may determine (select) an SRS resource included in an SRS resource set with SRS usage corresponding to codebook, on the basis of the SRI field in the DCI.

The UE for which non-codebook-based PUSCH transmission has been configured may determine (select) an SRS resource included in an SRS resource set with SRS usage corresponding to non-codebook, on the basis of the SRI field in the DCI.

Note that the number of SRS resources included in the SRS resource set with the usage corresponding to codebook and the number of SRS resources included in the SRS resource set with the usage corresponding to non-codebook may be different from each other, and the former may be two and the latter may be four, for example. In this case, an SRI field size may be 1 bit for the former, and may be 2 bits for the latter, for example.

Incidentally, in Rel. 15 NR, a spatial relation for the P-SRS is semi-statically configured in units of an SRS resource level. A maximum number of SRS resources for codebook-based transmission is two, and, in other words, only up to two spatial relations can be used. A maximum number of SRS resources for non-codebook-based transmission is four, and, in other words, only up to four spatial relations can be used.

Accordingly, for the P-SRS, RRC reconfiguration is required when an update of the spatial relation is required on the basis of movement of the UE or the like. The RRC reconfiguration needs relatively long time, and thus an update of the spatial relation for the P-SRS in Rel. 15 has remarkably low efficiency.

However, in NR of Rel. 16 or later versions, a speedup in an update of the spatial relation for the P-SRS is required for improvement in intra-cell and inter-cell mobility.

Thus, the inventors of the present invention came up with the idea of a method for appropriately configuring (or designating) a spatial relation for an SRS (for example, a P-SRS). According to one aspect of the present disclosure, it is possible to flexibly control a UL beam for an SRS, a UL beam for a PUSCH, or the like.

Hereinafter, embodiments according to the present disclosure will be described in detail with reference to the drawings. The radio communication methods according to respective embodiments may each be employed individually, or may be employed in combination.

Note that SRI in embodiments below may be interpreted as spatial relation information for an SRS (which may be referred to as SRI for SRS, SRS spatial relation info, and so on). "Apply an SRI ID (or SRI corresponding to the SRI ID) to a certain channel/signal" and "apply a spatial relation corresponding to the SRI ID to the certain channel/signal" may be interchangeably interpreted.

In the present disclosure, when a UE has a plurality of panels, an SRS resource set (or SRS resource set ID) may be the same as or may be different from a panel (or panel ID).

Note that, in the present disclosure, a panel, an Uplink (UL) transmission entity, a TRP, spatial relation information (SRI), a spatial relation, a control resource set (CORESET), a PDSCH, a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), and the like may be interchangeably interpreted.

A panel Identifier (ID) and a panel may be interchangeably interpreted. In other words, a TRP ID and a TRP, a CORESET group ID and a CORESET group, and the like may be interchangeably interpreted. An ID and an index may be interchangeably interpreted.

In the present disclosure, a sequence, a list, a set, a group, and the like may be interchangeably interpreted.

(Radio Communication Method)

<First Embodiment>

A first embodiment relates to an increase in the number of spatial relations configured by RRC by using at least one of an increase in the number of configured SRS resources in one SRS resource set and an increase in the number of configured SRS resource sets. Here, each of these increases may mean an increase from a maximum number used in Rel. 15 NR.

The first embodiment is broadly classified into Embodiments 1.1 to 1.3 below:

(Embodiment 1.1) a maximum number of the configured SRS resources in one SRS resource set is increased, while a maximum number of the configured SRS resource sets is not increased (the same as operation of Rel. 15),
(Embodiment 1.2) a maximum number of the configured SRS resource sets is increased, while a maximum number of the configured SRS resources in one SRS resource set is not increased (the same as operation of Rel. 15), and
(Embodiment 1.3) both a maximum number of the configured SRS resources in one SRS resource set and a maximum number of the configured SRS resource sets are increased.

In any one of Embodiments 1.1 to 1.3, more than two SRS resources for codebook-based transmission or more than four SRS resources for non-codebook-based transmission are configured for the UE.

{Embodiment 1.1}

In Embodiment 1.1, for UL beam management, a maximum number of configured SRS resources in one SRS resource set may be increased to a value (for example, a value being 32, 64, or more) greater than the maximum number (= 16) for Rel. 15 NR on the basis of a UE capability (maxNumberSRS-ResourcePerSet-BM) .

For codebook-based transmission (higher layer parameter txConfig = codebook), a maximum number of configured SRS resources in an SRS resource set with codebook usage may be increased to a value (for example, a value being 4, 8, 16, 32, 64, or more) greater than the maximum number (= 2) for Rel. 15 NR. Note that this value may be defined by specifications beforehand, or may be determined on the basis of a UE capability (for example, maxNumber-SRS-ResourcePerSet for mimo-CB-PUSCH) .

A size (the number of bits) of an SRS resource indicator (SRI) field in DCI may be assumed to be ceil ($\log_2(N_{SRS})$) on the basis of the number $N_{SRS}$ of the configured SRS resources in the SRS resource set with codebook usage. Here, ceil(X) is the ceiling function of X (this similarly applies hereinafter).

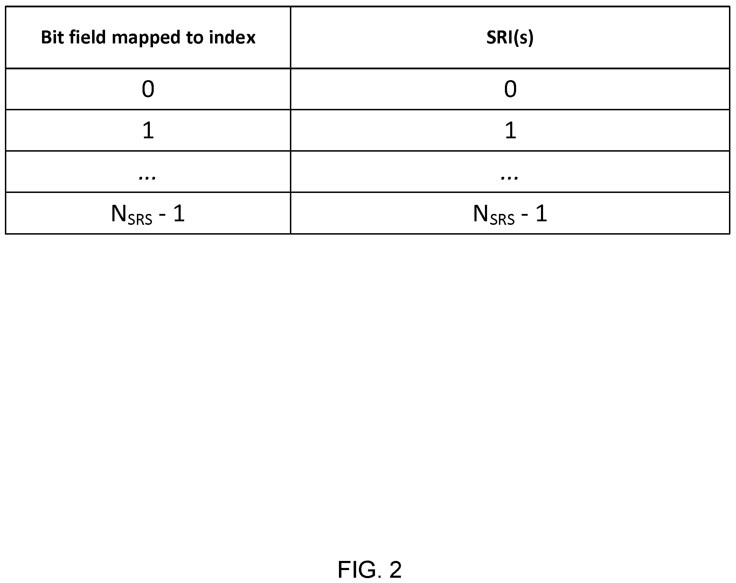

FIG. 2 is a diagram to show an example of SRI indication for the codebook-based transmission in Embodiment 1.1. A left column (bit field mapped to an index) of a table of FIG. 2 corresponds to values with the SRI field mapped to decimal indices. This similarly applies to the drawings below.

A right column of the table corresponds to SRIs (or SRS resource IDs) corresponding to the indices. As shown in FIG. 2, each value i (i = 0, ..., and $N_{SRS}$-1) of the index may correspond to the SRI = i. $N_{SRS}$ may be, for example, 4, 8, 16, 32, 64, or the like. Note that the correspondence is not limited to the example of FIG. 2. Different correspondence may be used for each $N_{SRS}$ value.

For non-codebook-based transmission (higher layer parameter txConfig = nonCodebook), a maximum number of configured SRS resources in an SRS resource set with non-codebook usage may be increased to a value (for example, a value being 8, 16, 32, 64, or more) greater than the maximum number (= 4) for Rel. 15 NR. Note that this value may be defined by specifications beforehand, or may be determined on the basis of a UE capability (for example, maxNumberSRS-ResourcePerSet for mimo-NonCB-PUSCH) .

A size (the number of bits) of an SRS resource indicator field in DCI may be calculated with ceil ($\log_2(\sum_{k=0}^{\min\{Lmax,NSRS\}} {}_{NSRS}C_k)$) on the basis of the number $N_{SRS}$ of the configured SRS resources in the SRS resource set with non-codebook usage.

Note that $L_{max}$ may be, when a maximum Multi Input Multi Output (MIMO) layer (higher layer parameter "maxMIMO-Layers") is configured for the UE, identified on the basis of the parameter, otherwise may be given by a maximum number of layers for a PUSCH supported by the UE for the non-codebook-based transmission.

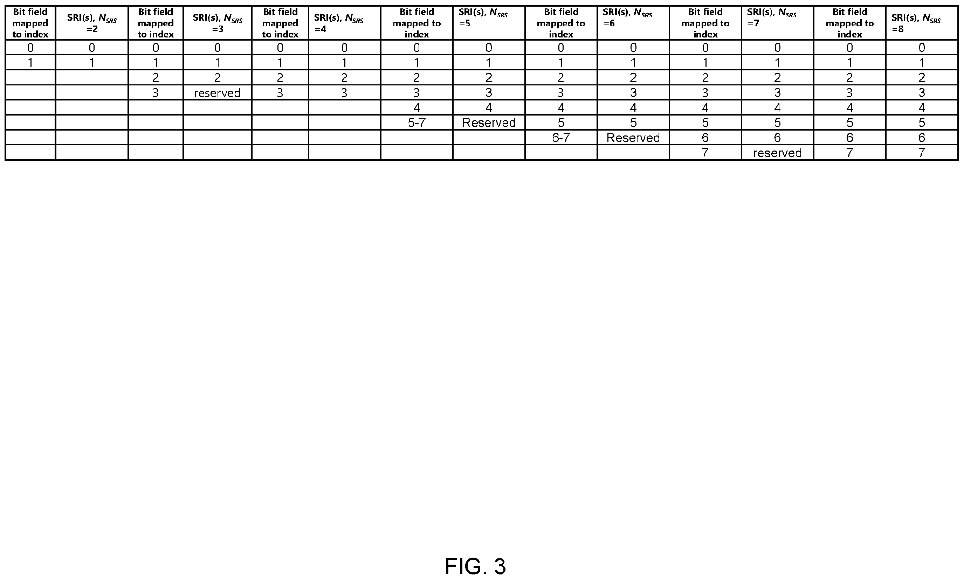

FIG. 3 is a diagram to show an example of SRI indication for the non-codebook-based transmission and $L_{max}$ = 1 in Embodiment 1.1. The present example shows up to one SRI (or SRS resource ID) corresponding to the index in a case where $N_{SRS}$ = x (x = 2, ..., and 8). As shown in FIG. 3, each value i (i = 0, ..., and $N_{SRS}$-1) of the index may correspond to the SRI = i. Note that the correspondence is not limited to the example of FIG. 3.

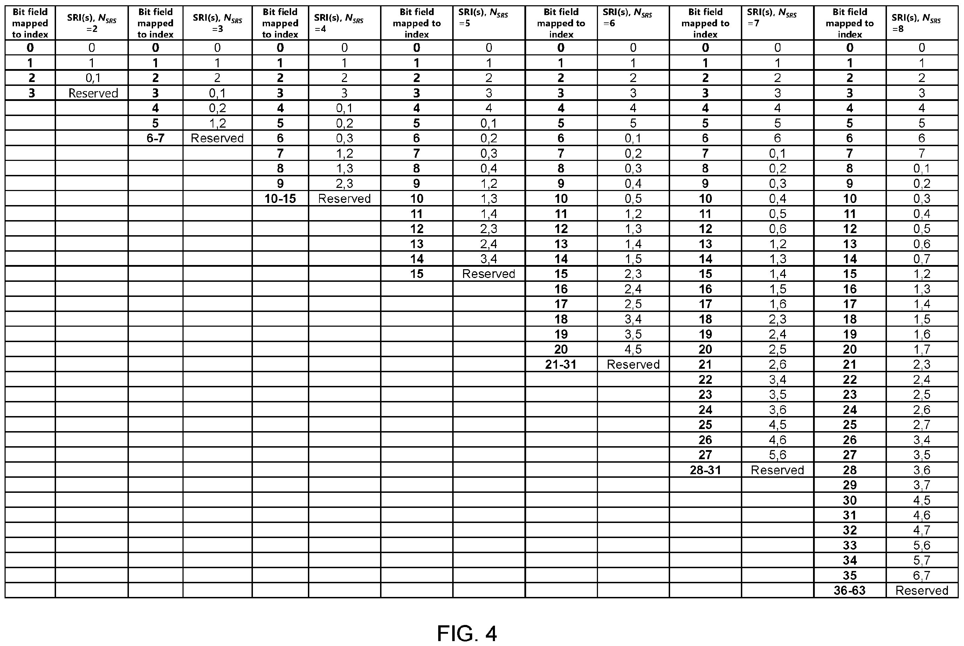

FIG. 4 is a diagram to show an example of SRI indication for the non-codebook-based transmission and $L_{max}$ = 2 in Embodiment 1.1. The present example shows up to two SRIs (or SRS resource IDs) corresponding to the index in a case where $N_{SRS}$ = x (x = 2, ..., and 8). Note that the correspondence is not limited to the example of FIG. 3.

<<Reduction in SRI Field Size>>

Note that when all of $N_{SRS}$ configured SRS resources are allowed to be designated with use of the SRI field in the DCI, the number of bits increases depending on $N_{SRS}$, as shown in FIG. 2 to FIG. 4. Therefore, it is preferable that an SRI field size be reduced (or limited).

For example, the SRI field size may be determined on the basis of the number of active SRS resources (for example, the number of active SRS resources with codebook or non-codebook usage). Here, the UE may activate or deactivate, on the basis of a MAC CE, SRS resources configured by RRC.

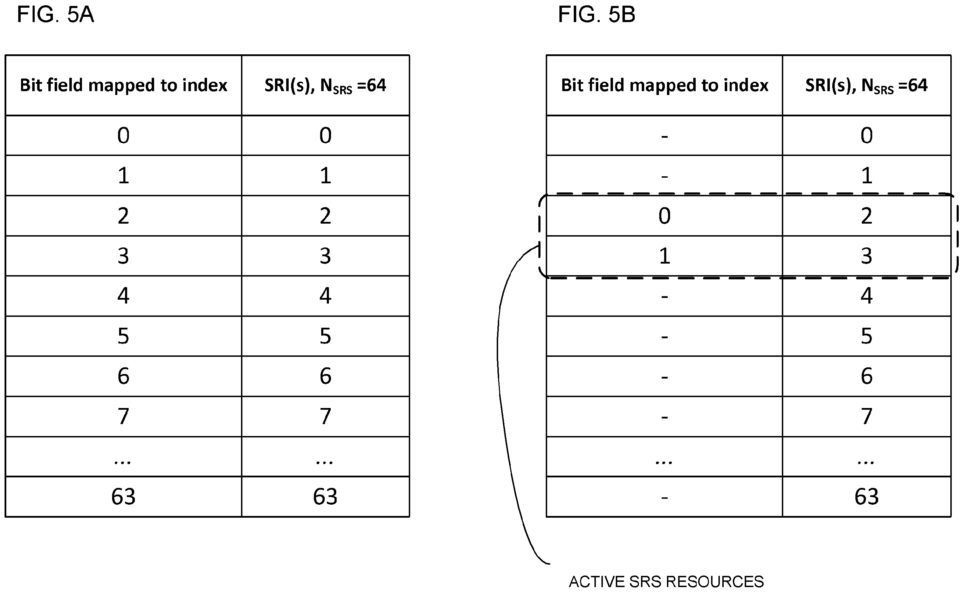

FIGS. 5A and 5B are diagrams to show an example of reduction in the SRI field size in Embodiment 1.1. In the example of the SRI indication for the codebook-based transmission shown in FIG. 2, FIG. 5A corresponds to a case where $N_{SRS}$ = 8, and the SRI field size is 6 bits.

FIG. 5B shows an example in which the UE determines the SRI field size on the basis of the number of the active SRS resources. Here, assume that SRS resources corresponding to SRIs = 2 and 3 are active. In this case, the number of the active SRS resources is 2, and thus the UE may judge that the SRI field size is $\log_2 2$ = 1 bit. The UE may assume that SRIs corresponding to deactivated SRS resources are not designated by the SRI field (in FIG. 5B, values of the SRI field are expressed as '-').

The UE may assume that the SRI field size (or a possible number of SRI values that can be designated by the SRI field) is the same as that of Rel. 15.

When more than two SRS resources are configured for the SRS resource set with codebook usage, the UE may assume that the SRI field for the codebook-based transmission is 1 bit (for example, SRI values that can be expressed are 0 and 1).

When more than four SRS resources are configured for the SRS resource set with non-codebook usage, the UE may assume that the SRI field for the non-codebook-based transmission is 2 bits (for example, SRI values that can be expressed are 0 to 3).

The SRI field size (or a possible number of SRI values that can be designated by the SRI field) may be configured for the UE by higher layer signaling.

The UE may determine the SRI field size (or a possible number of SRI values that can be designated by the SRI field) on the basis of a specific UE capability. For example, the UE may, when reporting that the specific UE capability is supported, determine that the SRI field size is lower than a value determined on the basis of $N_{SRS}$.

These reductions in the SRI field size may be applied only to one of the codebook-based transmission and the non-codebook-based transmission, or may be applied to both of the transmissions. When these reductions are applied to both of the transmissions, in both of the transmissions, the same value may be applied to the SRI field size, or different values may be applied to the SRI field size. For example, a parameter related to the SRI field size for the codebook-based transmission and a parameter related to the SRI field size for the non-codebook-based transmission may be configured to values different from each other for the UE by higher layer signaling.

{Embodiment 1.2}

In Embodiment 1.2, more than one SRS resource set may be configured for the same usage. For example, a configurable maximum number of SRS resource sets with codebook or non-codebook usage may be defined by specifications beforehand, or may be determined on the basis of a UE capability.

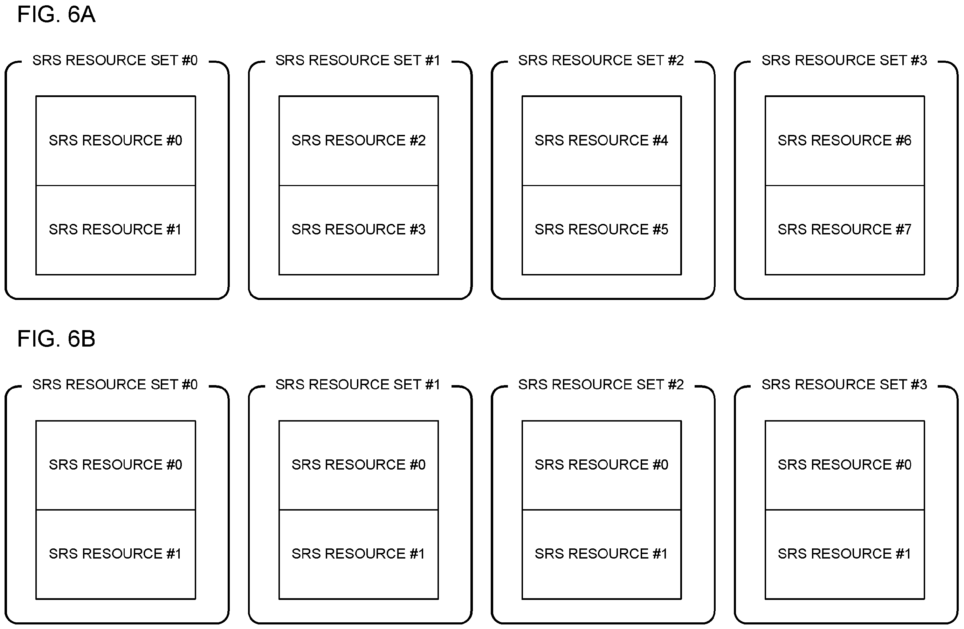

FIGS. 6A and 6B are diagrams to show examples of SRS resource IDs configured for a plurality of SRS resource sets in Embodiment 1.2. In the present example, assume that illustrated SRS resource sets #0 to #3 have the same usage (for example, codebook or non-codebook), but the present disclosure is not limited to this.

FIG. 6A shows an example in which SRS resource IDs are unique through the plurality of SRS resource sets. In this case, the UE may assume that the same SRS resource ID cannot be configured for different SRS resource sets. In FIG. 6A, SRS resources #2k and #2k+1 are configured for SRS resource set #k (k = 0 to 3).

FIG. 6B shows an example in which SRS resource IDs are shared through the plurality of the SRS resource sets. In this case, the UE may assume that the same SRS resource ID may be configured for different SRS resource sets. The UE may assume that the same SRS resource ID is configured for all SRS resource sets.

In FIG. 6B, SRS resources #0 and #1 are configured for all SRS resource sets #k (k = 0 to 3). According to such a configuration, for example, the UE can perform PUSCH transmission by applying different beams (QCL assumptions) on the basis of SRS resource sets even when using the same SRS resource.

<<Codebook-based Transmission>>

The UE for which the codebook-based transmission has been configured may assume that both SRS resource sets and SRS resources are identified on the basis of only the SRI field. In this case, the UE may assume that the SRI field size is $\text{ceil}(\log_2(\sum_{m=0}^{M_{SRS\ set}-1} N_{SRS,m}))$.

Here, $N_{SRS,m}$ is the number of configured SRS resources included in an SRS resource set m with codebook usage, and $M_{SRS\ set}$ is the number of configured SRS resource sets with codebook usage.

Correspondence (mapping relation) between the SRI field and the SRS resources may be defined by specifications beforehand, or may be determined in accordance with at least one of the following rules.

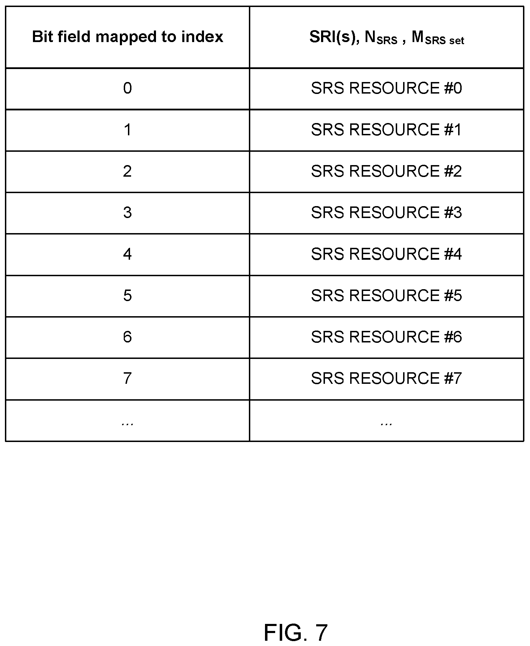

FIG. 7 is a diagram to show an example of SRI indication for the codebook-based transmission in a case where SRS resource IDs are unique through the plurality of the SRS resource sets. In the example of FIG. 7, a value of each index is defined so that the value indicates a different SRS resource ID. In this case, designating an SRS resource ID results in designation of an SRS resource set.

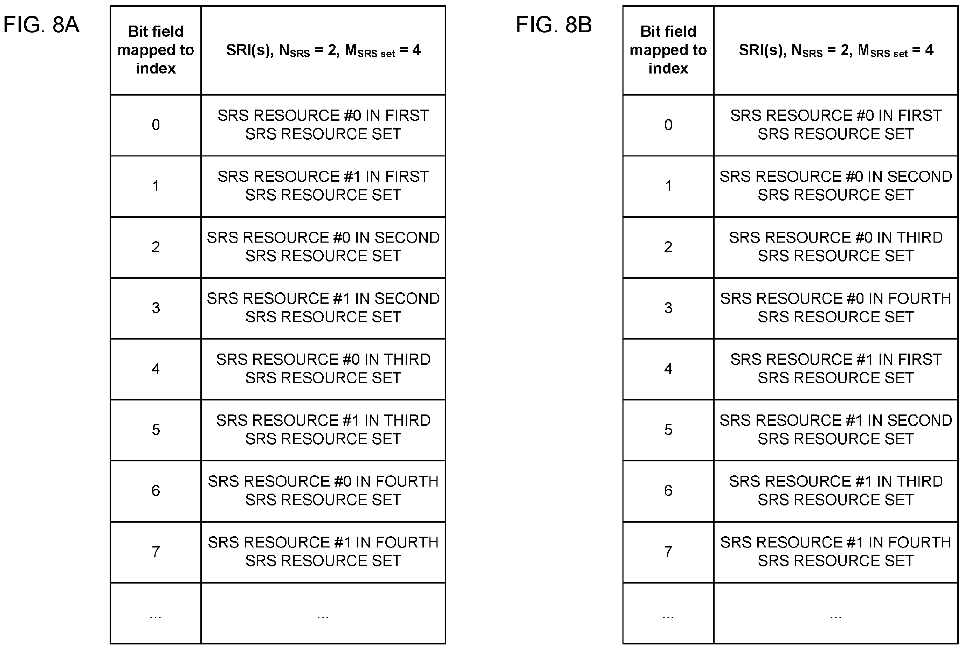

FIGS. 8A and 8B are diagrams to show examples of SRI indication for codebook-based transmission in a case where SRS resource IDs are shared through the plurality of the SRS resource sets. These examples show a case where each $N_{SRS,m} = N_{SRS,m} = 2$ and $M_{SRS\ set} = 4$, but the present disclosure is not limited to this.

FIG. 8A is a diagram to show correspondence between the SRI indication and SRS resources in which SRS resources of all configured SRS resource sets are rearranged in order based on an SRS resource ID first and then an SRS resource set ID second, and these are associated with indices in ascending order.

FIG. 8B is a diagram to show correspondence between the SRI indication and SRS resources in which SRS resources of all configured SRS resource sets are rearranged in order based on an SRS resource set ID first and then an SRS resource ID second, and these are associated with indices in ascending order.

The UE for which the codebook-based transmission has been configured may identify an SRS resource set on the basis of an SRS resource set indication (or indicator) (SRSI) field newly included in the DCI, and may identify an SRS resource in the SRS resource set on the basis of the SRI field.

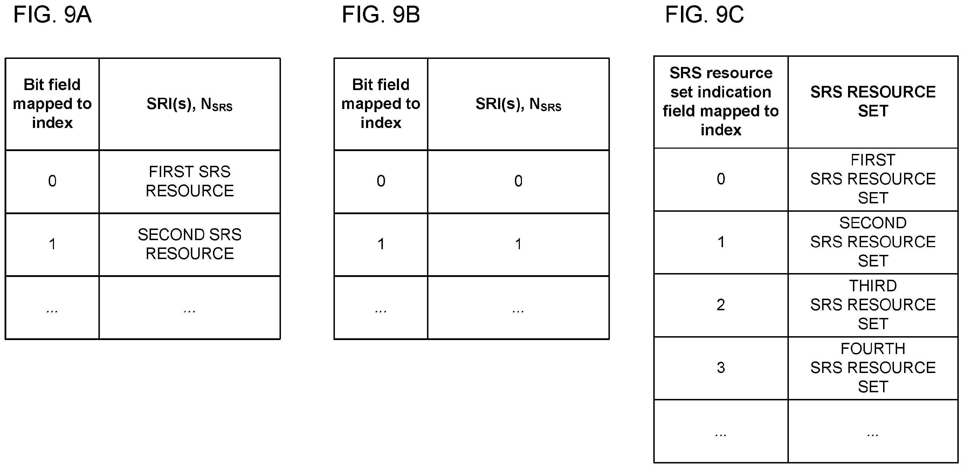

FIGS. 9A to 9C are diagrams to show examples of correspondence of the SRI field and the SRSI field. FIG. 9A is a diagram to show an example of correspondence of the SRI field for the codebook-based transmission in a case where SRS resource IDs are unique through the plurality of the SRS resource sets.

In the present example, a first SRS resource may mean an SRS resource corresponding to the lowest SRS resource ID in an SRS resource set designated by SRSI. A second SRS resource may mean an SRS resource corresponding to an ID larger than that of the first SRS resource. Note that "high" and "low" of the present disclosure may be interchangeably interpreted.

FIG. 9B is a diagram to show an example of correspondence of the SRI field for the codebook-based transmission in a case where SRS resource IDs are shared through the plurality of the SRS resource sets. In the present example, index 0 and index 1 correspond to SRI = 0 and SRI = 1, respectively, but the present disclosure is not limited to this.

FIG. 9C is a diagram to show an example of correspondence of the SRSI field for the codebook-based transmission. In the present example, index = i corresponds to the (i+1)-th SRS resource set, but the present disclosure is not limited to this.

«Non-codebook-based Transmission»

The UE for which the non-codebook-based transmission has been configured may assume that arbitrary SRS resources of arbitrary SRS resource sets can be designated at the same time by only the SRI field. In this case, for example, on the basis of the SRI field, SRS resource #0 of the first SRS resource set and SRS resource #3 of the second SRS resource set can be designated for the UE.

The UE for which the non-codebook-based transmission has been configured may assume that arbitrary SRS resources of only the same SRS resource set can be designated at the same time by only the SRI field. In this case, for example, on the basis of the SRI field, a combination of SRS resource #0 of the first SRS resource set and SRS resource #3 of the same first SRS resource set can be designated for the UE, but a combination of an SRS resource of the first SRS resource set and an SRS resource of the second SRS resource set cannot be designated for the UE.

The UE may judge that an SRI field size capable of designating arbitrary SRS resources of arbitrary SRS resource sets at the same time is

$$\left\lceil \log_2\left(\sum_{k=1}^{\min\left\{L_{max},\sum_{m=1}^{M_{SRS\ set}} N_{SRS,m}\right\}} \binom{\sum_{m=1}^{M_{SRS\ set}} N_{SRS,m}}{k}\right)\right\rceil$$

bits. The UE may judge that an SRI field size capable of designating arbitrary SRS resources of only the same SRS resource set at the same time is

$$\left\lceil \log_2 \left( \sum_{k=1}^{\min\{L_{max}, N_{SRS,m}\}} \sum_{m=1}^{M_{SRS\,set}} \binom{N_{SRS,m}}{k} \right) \right\rceil$$

bits.

Here, $N_{SRS,m}$ is the number of configured SRS resources included in the SRS resource set m with non-codebook usage, and $M_{SRS\,set}$ is the number of configured SRS resource sets with non-codebook usage.

The UE for which the non-codebook-based transmission has been configured may identify an SRS resource set on the basis of the above-mentioned SRSI field, and may identify an SRS resource in the SRS resource set on the basis of the SRI field. Regarding this, the descriptions overlap with descriptions described in FIGS. 9A to 9C, and thus the descriptions will not be repeated.

<<Reduction in SRI and SRSI Field Size>>

In Embodiment 1.2, an SRI field size may be reduced with use of a method similar to that of Embodiment 1.1. In Embodiment 1.2, an SRSI field size may be reduced.

For example, the SRSI field size may be determined on the basis of the number of active SRS resource sets (for example, the number of active SRS resource sets with codebook or non-codebook usage). Here, the UE may activate or deactivate, on the basis of a MAC CE, SRS resource sets configured by RRC.

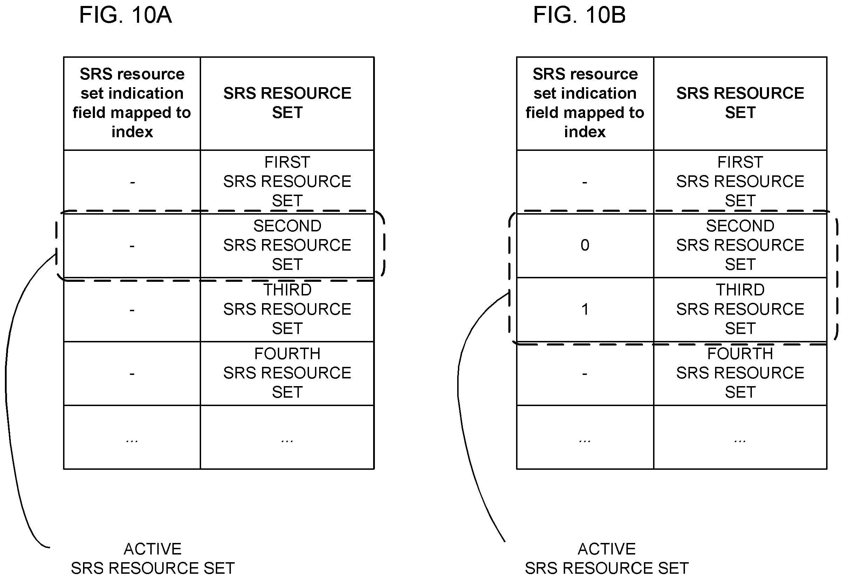

FIGS. 10A and 10B are diagrams to show examples of reduction in the SRSI field size in Embodiment 1.2. FIG. 10A and FIG. 10B show a case where an active SRS resource set is only a second SRS resource set and a case where active SRS resource sets are the second SRS resource set and a third SRS resource set, respectively.

In FIG. 10A, the number of the active SRS resource sets is one. In this case, the UE may judge that the SRSI field is $\log_2 1 = 0$ bit. The UE can assume that an SRS resource designated by the SRI field is an SRS resource included in the second SRS resource set.

In FIG. 10B, the number of the active SRS resource sets is two. In this case, the UE may judge that the SRSI field is $\log_2 2 = 1$ bit. The UE may assume that SRIs corresponding to deactivated SRS resources are not designated by the SRI field (in FIG. 5B, values of the SRI field are expressed as '-').

Note that, in a case where both SRS resource sets and SRS resources are identified by only the SRI field as shown in FIGS. 7, 8A, and 8B, the SRI field size may be judged in accordance with a similar policy on the basis of one or both of active SRS resources and active SRS resource sets.

The UE may assume that the sum of the SRI field size and the SRSI field size is the same as that of Rel. 15.

When a plurality of SRS resource sets with codebook usage are configured, the UE may assume that the sum of the SRI field size and the SRSI field size for the codebook-based transmission is 1 bit (for example, SRI values that can be expressed are 0 and 1).

When a plurality of SRS resource sets with non-codebook usage are configured, the UE may assume that the sum of the SRI field size and the SRSI field size for the non-codebook-based transmission is 2 bits (for example, SRI values that can be expressed are 0 to 3).

The SRSI field size may be configured for the UE by higher layer signaling. The UE may determine the SRSI field size on the basis of a specific UE capability.

These reductions in the SRI field size and the SRSI field size may be applied only to one of the codebook-based transmission and the non-codebook-based transmission, or may be applied to both of the transmissions. When these reductions are applied to both of the transmissions, in both of the transmissions, the same value may be applied to the SRSI field size, or different values may be applied to the SRSI field size. For example, a parameter related to the SRSI field size for the codebook-based transmission and a parameter related to the SRSI field size for the non-codebook-based transmission may be configured to values different from each other for the UE by higher layer signaling.

{Embodiment 1.3}

In Embodiment 1.3, for codebook-based transmission (higher layer parameter txConfig = codebook), more than one SRS resource set with codebook usage may be configured for the UE. For the codebook-based transmission, a maximum number of configurable SRS resources in the SRS resource set with codebook usage may be increased to a value (for example, a value being 4, 8, 16, 32, 64, or more) greater than the maximum number (= 2) for Rel. 15 NR.

A maximum number of configurable SRS resource sets for the codebook-based transmission may be defined by specifications beforehand, or may be determined on the basis of a UE capability. A maximum number of configurable SRS resources (maximum number of SRS resources in one SRS resource set) for the codebook-based transmission may be defined by the specifications beforehand, or may be determined on the basis of the UE capability.

In Embodiment 1.3, for non-codebook-based transmission (higher layer parameter txConfig = nonCodebook), more than one SRS resource set with non-codebook usage may be configured for the UE. For the non-codebook-based transmission, a maximum number of configurable SRS resources in the SRS resource set with non-codebook usage may be increased to a value (for example, a value being 8, 16, 32, 64, or more) greater than the maximum number (= 4) for Rel. 15 NR.

A maximum number of configurable SRS resource sets for the non-codebook-based transmission may be defined by specifications beforehand, or may be determined on the basis of a UE capability. A maximum number of configurable SRS resources (maximum number of SRS resources in one SRS resource set) for the non-codebook-based transmission may be defined by the specifications beforehand, or may be determined on the basis of the UE capability.

An SRS resource configuration, a method for identifying the SRI and SRSI field, and the like of Embodiment 1.3 may be similar to those of at least one of Embodiments 1.1 and 1.2. Note that $N_{SRS,m}$ described in Embodiment 1.2 may differ for each m in Embodiment 1.3.

According to the first embodiment described above, multiple SRIs can be used by being dynamically switched.

<Second Embodiment>

A second embodiment relates to SRS spatial relation information. In the second embodiment, for more flexible spatial relation control, as a reference RS corresponding to a target SRS, not only an SSB, a CSI-RS, a P-SRS, and an SP-SRS configurable in Rel. 15 NR, but also at least one of an A-SRS and a CORESET may be supported.

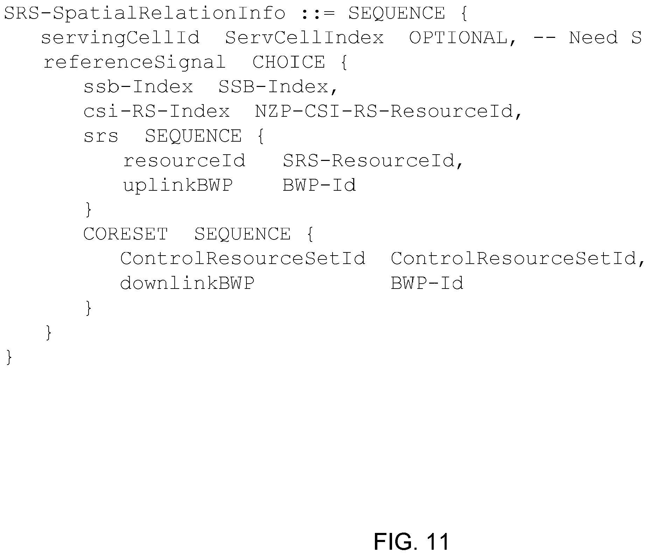

FIG. 11 is a diagram to show an example of configuration information about an SRS spatial relation according to the second embodiment. FIG. 11 is described with use of ASN.1 (Abstract Syntax Notation One) notation (note that FIG. 11 is just an example, and thus is not perfectly described). Note that the name of an RRC parameter is not limited to the name shown in FIG. 11.

In the present example, configuration information about a spatial relation associated with an SRS resource (for example, an RRC IE "SRS-SpatialRelationInfo" (which may be represented as "SRS-SpatialRelationInfo-r16," "SRS-SpatialRelationInfo-r17," and so on)) is different from "SRS-SpatialRelationInfo" of Rel. 15 in terms of "CORESET" configurable for the reference RS (parameter "referenceSignal").

The parameter "CORESET" may include at least one of a parameter ("ControlResourceSetId") indicating an ID of a CORESET and a parameter ("BWP-Id") indicating a downlink BWP to which the CORESET belongs.

A UE may assume that all of the P-SRS, SP-SRS, and A-SRS are configurable as resource IDs for a parameter "srs."

SRS resource configuration information (RRC parameter "SRS-Resource") may include one or a plurality of pieces of configuration information about the above-described spatial relation.

When the configuration information about the above-described spatial relation associated with a certain SRS resource (target SRS resource) relates to a reference SRS (includes the parameter "srs"), the UE may transmit the target SRS resource by using the same spatial domain filter as a spatial domain filter for transmission of at least one of a reference P-SRS, a reference SP-SRS, and a reference A-SRS.

When the configuration information about the above-described spatial relation associated with the target SRS resource relates to a reference CORESET (includes the parameter "CORESET"), the UE may transmit the target SRS resource by using the same spatial domain filter as a spatial domain filter for reception of a reference CORESET (or a PDCCH, a PDCCH-DMRS, or the like related to the reference CORESET).

Note that the target SRS resource may be, for example, at least one of a P-SRS resource, an SP-SRS resource, and an A-SRS resource.

According to the second embodiment described above, a more appropriate reference signal can be configured as an SRS spatial relation.

<Third Embodiment>

A third embodiment relates to a MAC CE to update a P-SRS spatial relation. In existing Rel. 15 NR, a spatial relation for a P-SRS can be configured only by RRC signaling, but it is possible to support a dynamic update by using the MAC CE.

A reference signal resource used for deriving a spatial relation for an SRS resource included in a certain SRS resource set may be activated by the MAC CE for a UE. Such activation may be referred to as an update (or override) of a spatial relation (SRI) corresponding to an SRS resource. Note that, in the present disclosure, activation, deactivation, indication, selection, update, determination, and the like may be interchangeably interpreted.

The UE may assume that a spatial relation (SRI) activated by the above-mentioned MAC CE with respect to an SRS resource designated by DCI is applied to transmission of a certain signal/channel (for example, a PUSCH or an SRS).

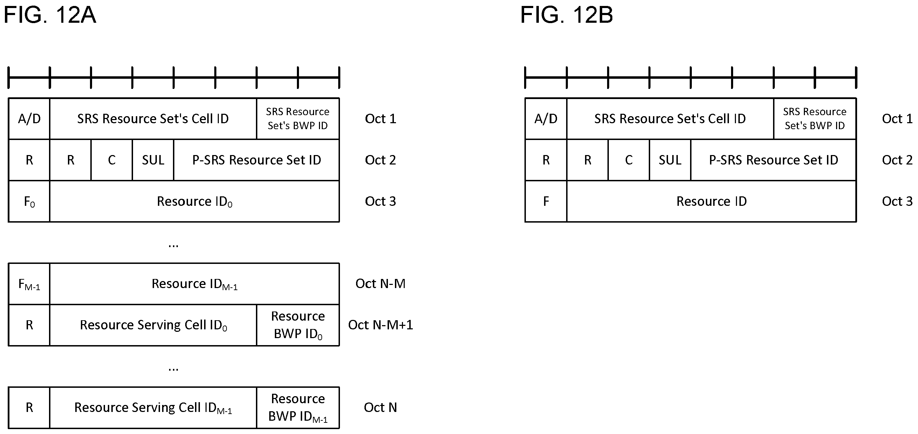

FIGS. 12A and 12B are diagrams to show examples of the MAC CE for an update of the P-SRS spatial relation according to the third embodiment.

FIG. 12A shows an example of a MAC CE usable for an update of the spatial relation at an SRS resource level. The MAC CE may include information ("A/D" field) indicating activation or deactivation, a cell ID for identification of a cell including an SRS resource set as a target to be activated, a BWP ID corresponding to a UL bandwidth part (BWP) including an SRS resource set as a target to be activated, a P-SRS resource set ID as a target to be activated, a carrier ("SUL" field) as a target to be activated, a reference signal resource ID corresponding to a spatial relation for an SRS resource, or the like. Note that "R" indicates a reserved field.

A reference signal resource ID for the i-th SRS resource in the SRS resource set corresponds to "Resource IDi." Note that the reference signal resource ID may be, for example, at least one of a non-zero power CSI-RS resource index, an SSB index, an SRS resource ID, a CORESET ID, and the like. The MAC CE may include a serving cell ID, a BWP ID, and the like corresponding to the reference signal resource ID (whether to include these may be indicated by a "C" field).

Fi may be used for identifying which reference signal (for example, a CSI-RS, an SSB, an SRS (P-SRS, SP-SRS, or A-SRS), or a CORESET) "Resource IDi" corresponds to. Which reference signal "Resource IDi" corresponds to may be judged on the basis of a combination of Fi and a specific bit of "Resource IDi" itself.

In FIG. 12A, Fi is represented by 1 bit, but this is not restrictive. For example, the UE for which the configuration information about the spatial relation described in the second embodiment has been configured may assume that Fi is 2 bits, 3 bits, or more. In this case, a size of "Resource ID$_i$" is not limited to 7 bits. For example, when Fi is 2 bits, Fi = 0 may indicate that the resource ID is an SSB index or an SRS resource index, Fi = 1 may indicate that the resource ID is an NZP CSI-RS index or an SRS resource index, and F$_i$ = 2 may indicate that the resource ID is a CORESET ID.

The MAC CE of FIG. 12A may be applicable to at least one (for example, all) of SRS resource sets with codebook, non-codebook, beam management, and antenna switching usage.

FIG. 12B shows an example of a MAC CE usable for an update of the spatial relation at an SRS resource set level. The MAC CE is similar to that of FIG. 12A but differs from that of FIG. 12A in terms of F and Resource ID included in the MAC CE in place of Fi and Resource IDi. Resource ID corresponds to reference signal resource IDs for all SRS resources in SRS resource sets. F may be used for identifying which reference signal Resource ID corresponds to. Similarly to Fi, F may be 2 bits or more.

The MAC CE of FIG. 12B may be applicable to at least one (for example, beam management) of SRS resource sets with codebook, non-codebook, beam management, and antenna switching usage.

Note that, when the MAC CE for an update of the P-SRS spatial relation of the third embodiment is supported, the UE may update a plurality of spatial relations extending to a plurality of CCs, a plurality of BWPs, and the like at the same time by using the MAC CE.

For example, a list of CCs (or BWPs) may be configured for the UE by RRC. One or a plurality of lists of the CCs (or BWPs) may be configured. Once a beam (QCL, TCI state, or spatial relation) for any CC out of the list of the CCs is updated, the UE may update a beam for another CC included in the list of the CCs to the same beam.

Once a P-SRS spatial relation for a specific CC (cell) is updated by the above-described MAC CE, the UE may update, also for another CC included in the above-described list including the specific CC, a P-SRS spatial relation to the same as the updated spatial relation for the above-described specific cell.

According to the third embodiment described above, spatial relations corresponding to SRS resources can be used by being dynamically switched.

<Other Embodiments>

Note that the P-SRS of each of the above-mentioned embodiments may be interpreted as at least one of the P-SRS, SP-SRS, and A-SRS.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

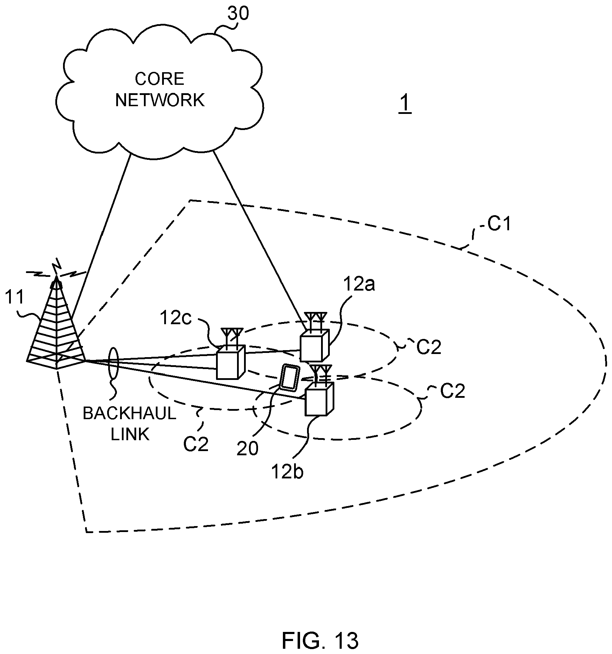

FIG. 13 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the

PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

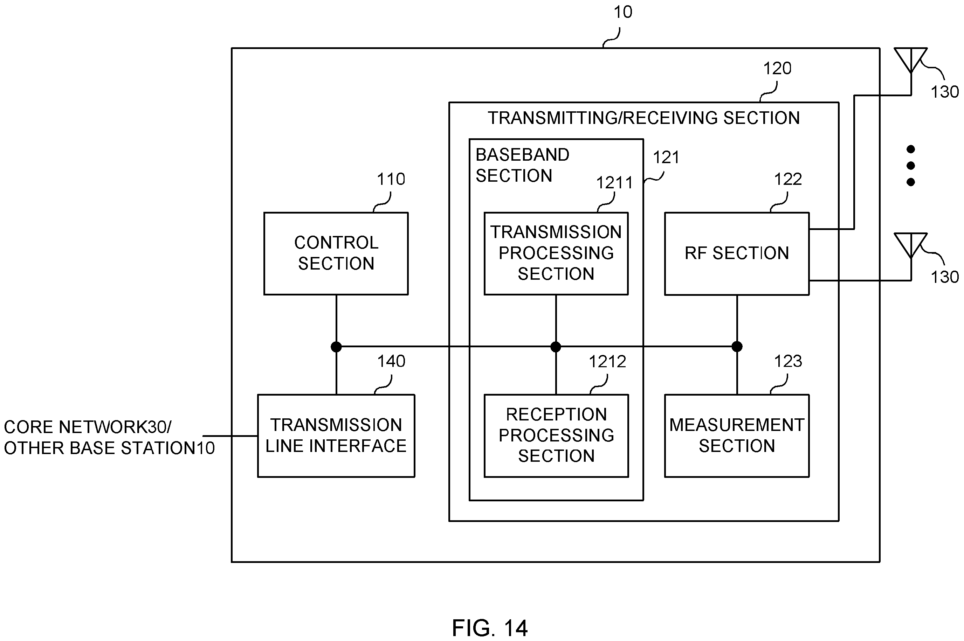

FIG. 14 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the control section 110 may, when more than two sounding reference signal (SRS) resources for codebook-based transmission or more than four SRS resources for non-codebook-based transmission are configured for the user terminal 20, control a size of an SRS resource indicator (SRI) field in downlink control information (DCI) to indicate the transmission.

The transmitting/receiving section 120 may receive transmission (for example, a PUSCH or an SRS) from the user terminal 20 based on an SRS resource indicated by the SRI field.

(User Terminal)

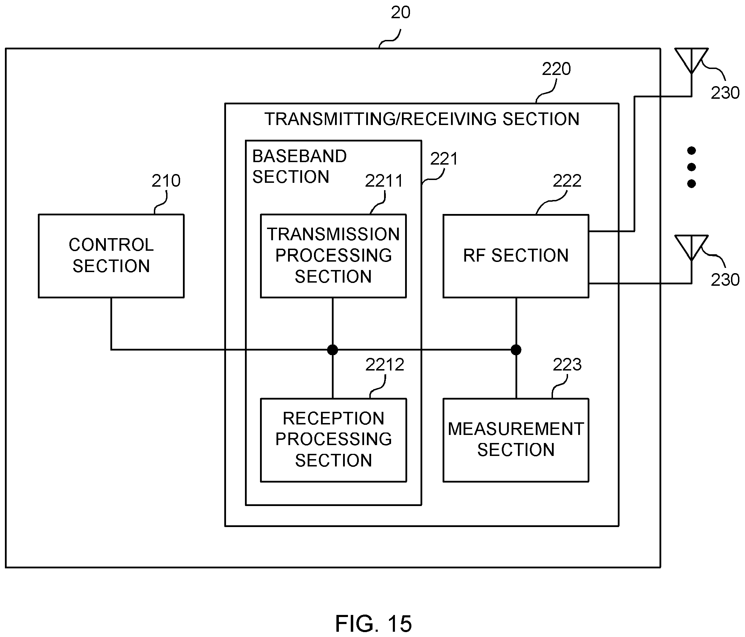

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may, when more than two sounding reference signal (SRS) resources for codebook-based transmission or more than four SRS resources for non-codebook-based transmission are configured, judge a size of an SRS resource indicator (SRI) field in downlink control information (DCI, for example, DCI format 0_1 to schedule a PUSCH) to indicate the transmission.

Note that an SRI of the present disclosure may be interpreted as a spatial relation.

The transmitting/receiving section 220 may perform the transmission (transmission of a PUSCH, an SRS, or the like) on the basis of an SRS resource indicated by the SRI field.

The control section 210 may judge the size of the SRI field on the basis of the number of active SRS resources or the number of configured SRS resource sets.

The control section 210 may perform the transmission on the basis of spatial relation information associated with the SRS resource indicated by the SRI field by using the same spatial domain filter as a spatial domain filter for reception of a control resource set (CORESET).

The control section 210 may judge a spatial relation related to a periodic SRS resource on the basis of a Medium Access Control (MAC) control element (MAC CE).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

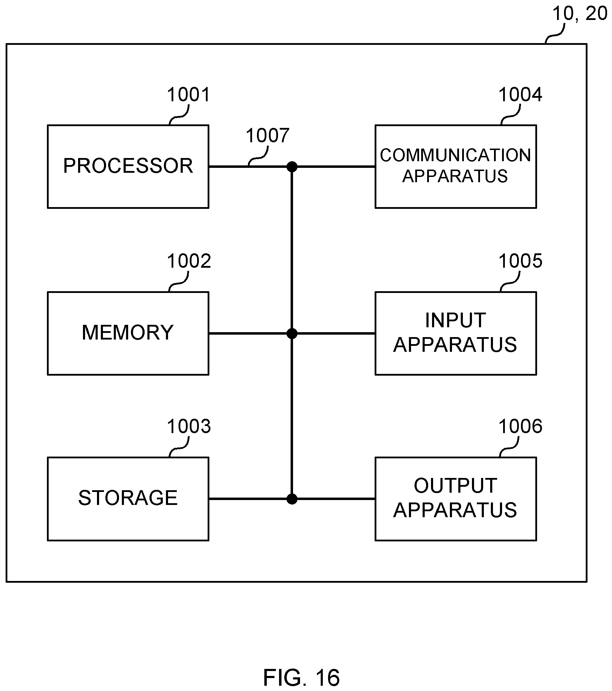

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

    a control section that, when more than two sounding reference signal (SRS) resources for codebook-based transmission or more than four SRS resources for non-codebook-based transmission are configured, determines a size of an SRS resource indicator (SRI) field in downlink control information to indicate the transmission; and
    a transmitting section that performs the transmission on the basis of an SRS resource indicated by the SRI field.

2. The terminal according to claim 1, wherein
   the control section determines the size of the SRI field on the basis of the number of active SRS resources or the number of configured SRS resource sets.

3. The terminal according to claim 1 or 2, wherein
   the transmitting section performs the transmission on the basis of spatial relation information associated with the SRS resource indicated by the SRI field by using a same spatial domain filter as a spatial domain filter for reception of a control resource set (CORESET).

4. The terminal according to any one of claims 1 to 3, wherein
   the control section determines a spatial relation related to a periodic SRS resource on the basis of a Medium Access Control (MAC) control element.

5. A radio communication method of a terminal, the radio communication method comprising:

    determining, when more than two sounding reference signal (SRS) resources for codebook-based transmission or more than four SRS resources for non-codebook-based transmission are configured, a size of an SRS resource indicator (SRI) field in downlink control information to indicate the transmission; and
    performing the transmission on the basis of an SRS resource indicated by the SRI field.

6. A base station comprising:

    a control section that, when more than two sounding reference signal (SRS) resources for codebook-based transmission or more than four SRS resources for non-codebook-based transmission are configured for a terminal, controls a size of an SRS resource indicator (SRI) field in downlink control information to indicate the transmission; and

a receiving section that receives transmission from the terminal based on an SRS resource indicated by the SRI field.

```
SRS-SpatialRelationInfo ::= SEQUENCE {
   servingCellId  ServCellIndex  OPTIONAL, -- Need S
   referenceSignal  CHOICE {
       ssb-Index  SSB-Index,
       csi-RS-Index  NZP-CSI-RS-ResourceId,
       srs  SEQUENCE {
           resourceId  SRS-ResourceId,
           uplinkBWP  BWP-Id
       }
   }
}
```

FIG. 1

| Bit field mapped to index | SRI(s) |
|---|---|
| 0 | 0 |
| 1 | 1 |
| ... | ... |
| $N_{SRS} - 1$ | $N_{SRS} - 1$ |

FIG. 2

EP 4 096 316 A1

| Bit field mapped to index | SRI(s), $N_{SRS}$ =2 | Bit field mapped to index | SRI(s), $N_{SRS}$ =3 | Bit field mapped to index | SRI(s), $N_{SRS}$ =4 | Bit field mapped to index | SRI(s), $N_{SRS}$ =5 | Bit field mapped to index | SRI(s), $N_{SRS}$ =6 | Bit field mapped to index | SRI(s), $N_{SRS}$ =7 | Bit field mapped to index | SRI(s), $N_{SRS}$ =8 |
|---|---|---|---|---|---|---|---|---|---|---|---|---|---|
| 0 | 0 | 0 | 0 | 0 | 0 | 0 | 0 | 0 | 0 | 0 | 0 | 0 | 0 |
| 1 | 1 | 1 | 1 | 1 | 1 | 1 | 1 | 1 | 1 | 1 | 1 | 1 | 1 |
|  |  | 2 | 2 | 2 | 2 | 2 | 2 | 2 | 2 | 2 | 2 | 2 | 2 |
|  |  | 3 | reserved | 3 | 3 | 3 | 3 | 3 | 3 | 3 | 3 | 3 | 3 |
|  |  |  |  |  |  | 4 | 4 | 4 | 4 | 4 | 4 | 4 | 4 |
|  |  |  |  |  |  | 5-7 | Reserved | 5 | 5 | 5 | 5 | 5 | 5 |
|  |  |  |  |  |  |  |  | 6-7 | Reserved | 6 | 6 | 6 | 6 |
|  |  |  |  |  |  |  |  |  |  | 7 | reserved | 7 | 7 |

FIG. 3

EP 4 096 316 A1

| Bit field mapped to index | SRI(s), $N_{SRS}$ =2 | Bit field mapped to index | SRI(s), $N_{SRS}$ =3 | Bit field mapped to index | SRI(s), $N_{SRS}$ =4 | Bit field mapped to index | SRI(s), $N_{SRS}$ =5 | Bit field mapped to index | SRI(s), $N_{SRS}$ =6 | Bit field mapped to index | SRI(s), $N_{SRS}$ =7 | Bit field mapped to index | SRI(s), $N_{SRS}$ =8 |
|---|---|---|---|---|---|---|---|---|---|---|---|---|---|
| 0 | 0 | 0 | 0 | 0 | 0 | 0 | 0 | 0 | 0 | 0 | 0 | 0 | 0 |
| 1 | 1 | 1 | 1 | 1 | 1 | 1 | 1 | 1 | 1 | 1 | 1 | 1 | 1 |
| 2 | 0,1 | 2 | 2 | 2 | 2 | 2 | 2 | 2 | 2 | 2 | 2 | 2 | 2 |
| 3 | Reserved | 3 | 0,1 | 3 | 3 | 3 | 3 | 3 | 3 | 3 | 3 | 3 | 3 |
| | | 4 | 0,2 | 4 | 0,1 | 4 | 4 | 4 | 4 | 4 | 4 | 4 | 4 |
| | | 5 | 1,2 | 5 | 0,2 | 5 | 0,1 | 5 | 5 | 5 | 5 | 5 | 5 |
| | | 6-7 | Reserved | 6 | 0,3 | 6 | 0,2 | 6 | 0,1 | 6 | 6 | 6 | 6 |
| | | | | 7 | 1,2 | 7 | 0,3 | 7 | 0,2 | 7 | 0,1 | 7 | 7 |
| | | | | 8 | 1,3 | 8 | 0,4 | 8 | 0,3 | 8 | 0,2 | 8 | 0,1 |
| | | | | 9 | 2,3 | 9 | 1,2 | 9 | 0,4 | 9 | 0,3 | 9 | 0,2 |
| | | | | 10-15 | Reserved | 10 | 1,3 | 10 | 0,5 | 10 | 0,4 | 10 | 0,3 |
| | | | | | | 11 | 1,4 | 11 | 1,2 | 11 | 0,5 | 11 | 0,4 |
| | | | | | | 12 | 2,3 | 12 | 1,3 | 12 | 0,6 | 12 | 0,5 |
| | | | | | | 13 | 2,4 | 13 | 1,4 | 13 | 1,2 | 13 | 0,6 |
| | | | | | | 14 | 3,4 | 14 | 1,5 | 14 | 1,3 | 14 | 0,7 |
| | | | | | | 15 | Reserved | 15 | 2,3 | 15 | 1,4 | 15 | 1,2 |
| | | | | | | | | 16 | 2,4 | 16 | 1,5 | 16 | 1,3 |
| | | | | | | | | 17 | 2,5 | 17 | 1,6 | 17 | 1,4 |
| | | | | | | | | 18 | 3,4 | 18 | 2,3 | 18 | 1,5 |
| | | | | | | | | 19 | 3,5 | 19 | 2,4 | 19 | 1,6 |
| | | | | | | | | 20 | 4,5 | 20 | 2,5 | 20 | 1,7 |
| | | | | | | | | 21-31 | Reserved | 21 | 2,6 | 21 | 2,3 |
| | | | | | | | | | | 22 | 3,4 | 22 | 2,4 |
| | | | | | | | | | | 23 | 3,5 | 23 | 2,5 |
| | | | | | | | | | | 24 | 3,6 | 24 | 2,6 |
| | | | | | | | | | | 25 | 4,5 | 25 | 2,7 |
| | | | | | | | | | | 26 | 4,6 | 26 | 3,4 |
| | | | | | | | | | | 27 | 5,6 | 27 | 3,5 |
| | | | | | | | | | | 28-31 | Reserved | 28 | 3,6 |
| | | | | | | | | | | | | 29 | 3,7 |
| | | | | | | | | | | | | 30 | 4,5 |
| | | | | | | | | | | | | 31 | 4,6 |
| | | | | | | | | | | | | 32 | 4,7 |
| | | | | | | | | | | | | 33 | 5,6 |
| | | | | | | | | | | | | 34 | 5,7 |
| | | | | | | | | | | | | 35 | 6,7 |
| | | | | | | | | | | | | 36-63 | Reserved |

FIG. 4

FIG. 5A

| Bit field mapped to index | SRI(s), $N_{SRS} = 64$ |
|---|---|
| 0 | 0 |
| 1 | 1 |
| 2 | 2 |
| 3 | 3 |
| 4 | 4 |
| 5 | 5 |
| 6 | 6 |
| 7 | 7 |
| ... | ... |
| 63 | 63 |

FIG. 5B

| Bit field mapped to index | SRI(s), $N_{SRS} = 64$ |
|---|---|
| - | 0 |
| - | 1 |
| 0 | 2 |
| 1 | 3 |
| - | 4 |
| - | 5 |
| - | 6 |
| - | 7 |
| ... | ... |
| - | 63 |

ACTIVE SRS RESOURCES

## FIG. 6A

| SRS RESOURCE SET #0 | SRS RESOURCE SET #1 | SRS RESOURCE SET #2 | SRS RESOURCE SET #3 |
|---|---|---|---|
| SRS RESOURCE #0<br><br>SRS RESOURCE #1 | SRS RESOURCE #2<br><br>SRS RESOURCE #3 | SRS RESOURCE #4<br><br>SRS RESOURCE #5 | SRS RESOURCE #6<br><br>SRS RESOURCE #7 |

## FIG. 6B

| SRS RESOURCE SET #0 | SRS RESOURCE SET #1 | SRS RESOURCE SET #2 | SRS RESOURCE SET #3 |
|---|---|---|---|
| SRS RESOURCE #0<br><br>SRS RESOURCE #1 | SRS RESOURCE #0<br><br>SRS RESOURCE #1 | SRS RESOURCE #0<br><br>SRS RESOURCE #1 | SRS RESOURCE #0<br><br>SRS RESOURCE #1 |

EP 4 096 316 A1

| Bit field mapped to index | SRI(s), $N_{SRS}$, $M_{SRS\ set}$ |
| --- | --- |
| 0 | SRS RESOURCE #0 |
| 1 | SRS RESOURCE #1 |
| 2 | SRS RESOURCE #2 |
| 3 | SRS RESOURCE #3 |
| 4 | SRS RESOURCE #4 |
| 5 | SRS RESOURCE #5 |
| 6 | SRS RESOURCE #6 |
| 7 | SRS RESOURCE #7 |
| ... | ... |

FIG. 7

FIG. 8A

| Bit field mapped to index | SRI(s), $N_{SRS} = 2$, $M_{SRS\ set} = 4$ |
|---|---|
| 0 | SRS RESOURCE #0 IN FIRST SRS RESOURCE SET |
| 1 | SRS RESOURCE #1 IN FIRST SRS RESOURCE SET |
| 2 | SRS RESOURCE #0 IN SECOND SRS RESOURCE SET |
| 3 | SRS RESOURCE #1 IN SECOND SRS RESOURCE SET |
| 4 | SRS RESOURCE #0 IN THIRD SRS RESOURCE SET |
| 5 | SRS RESOURCE #1 IN THIRD SRS RESOURCE SET |
| 6 | SRS RESOURCE #0 IN FOURTH SRS RESOURCE SET |
| 7 | SRS RESOURCE #1 IN FOURTH SRS RESOURCE SET |
| ... | ... |

FIG. 8B

| Bit field mapped to index | SRI(s), $N_{SRS} = 2$, $M_{SRS\ set} = 4$ |
|---|---|
| 0 | SRS RESOURCE #0 IN FIRST SRS RESOURCE SET |
| 1 | SRS RESOURCE #0 IN SECOND SRS RESOURCE SET |
| 2 | SRS RESOURCE #0 IN THIRD SRS RESOURCE SET |
| 3 | SRS RESOURCE #0 IN FOURTH SRS RESOURCE SET |
| 4 | SRS RESOURCE #1 IN FIRST SRS RESOURCE SET |
| 5 | SRS RESOURCE #1 IN SECOND SRS RESOURCE SET |
| 6 | SRS RESOURCE #1 IN THIRD SRS RESOURCE SET |
| 7 | SRS RESOURCE #1 IN FOURTH SRS RESOURCE SET |
| ... | ... |

FIG. 9A

| Bit field mapped to index | SRI(s), $N_{SRS}$ |
|---|---|
| 0 | FIRST SRS RESOURCE |
| 1 | SECOND SRS RESOURCE |
| ... | ... |

FIG. 9B

| Bit field mapped to index | SRI(s), $N_{SRS}$ |
|---|---|
| 0 | 0 |
| 1 | 1 |
| ... | ... |

FIG. 9C

| SRS resource set indication field mapped to index | SRS RESOURCE SET |
|---|---|
| 0 | FIRST SRS RESOURCE SET |
| 1 | SECOND SRS RESOURCE SET |
| 2 | THIRD SRS RESOURCE SET |
| 3 | FOURTH SRS RESOURCE SET |
| ... | ... |

EP 4 096 316 A1

## FIG. 10A

| SRS resource set indication field mapped to index | SRS RESOURCE SET |
|---|---|
| - | FIRST SRS RESOURCE SET |
| - | SECOND SRS RESOURCE SET |
| - | THIRD SRS RESOURCE SET |
| - | FOURTH SRS RESOURCE SET |
| ... | ... |

ACTIVE
SRS RESOURCE SET

## FIG. 10B

| SRS resource set indication field mapped to index | SRS RESOURCE SET |
|---|---|
| - | FIRST SRS RESOURCE SET |
| 0 | SECOND SRS RESOURCE SET |
| 1 | THIRD SRS RESOURCE SET |
| - | FOURTH SRS RESOURCE SET |
| ... | ... |

ACTIVE
SRS RESOURCE SET

EP 4 096 316 A1

```
SRS-SpatialRelationInfo ::= SEQUENCE {
   servingCellId  ServCellIndex   OPTIONAL, -- Need S
   referenceSignal  CHOICE {
      ssb-Index  SSB-Index,
      csi-RS-Index  NZP-CSI-RS-ResourceId,
      srs   SEQUENCE {
         resourceId    SRS-ResourceId,
         uplinkBWP     BWP-Id
      }
      CORESET   SEQUENCE {
         ControlResourceSetId  ControlResourceSetId,
         downlinkBWP           BWP-Id
      }
   }
}
```

FIG. 11

## FIG. 12A

| A/D | SRS Resource Set's Cell ID | | | SRS Resource Set's BWP ID | Oct 1 |
|---|---|---|---|---|---|

| R | R | C | SUL | P-SRS Resource Set ID | Oct 2 |
|---|---|---|---|---|---|

| $F_0$ | Resource $ID_0$ | Oct 3 |
|---|---|---|

...

| $F_{M-1}$ | Resource $ID_{M-1}$ | Oct N-M |
|---|---|---|

| R | Resource Serving Cell $ID_0$ | Resource BWP $ID_0$ | Oct N-M+1 |
|---|---|---|---|

...

| R | Resource Serving Cell $ID_{M-1}$ | Resource BWP $ID_{M-1}$ | Oct N |
|---|---|---|---|

## FIG. 12B

| A/D | SRS Resource Set's Cell ID | | | SRS Resource Set's BWP ID | Oct 1 |
|---|---|---|---|---|---|

| R | R | C | SUL | P-SRS Resource Set ID | Oct 2 |
|---|---|---|---|---|---|

| F | Resource ID | Oct 3 |
|---|---|---|

EP 4 096 316 A1

FIG. 13

FIG. 14

EP 4 096 316 A1

FIG. 15

EP 4 096 316 A1

10, 20

1001

PROCESSOR

1007

1004

COMMUNICATION APPARATUS

1002

MEMORY

1005

INPUT APPARATUS

1003

STORAGE

1006

OUTPUT APPARATUS

FIG. 16

| | | INTERNATIONAL SEARCH REPORT | International application No. |
|---|---|---|---|
| | | | PCT/JP2020/002636 |

**A. CLASSIFICATION OF SUBJECT MATTER**
H04W 72/04(2009.01)i; H04W 28/06(2009.01)i; H04W 28/16(2009.01)i
FI: H04W72/04 136; H04W28/16; H04W28/06 110

According to International Patent Classification (IPC) or to both national classification and IPC

**B. FIELDS SEARCHED**

Minimum documentation searched (classification system followed by classification symbols)
H04B7/24-7/26; H04W4/00-99/00

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | NOKIA, "Introduction of NR enhanced MIMO", 3GPP TSG RAN WG1 #99 R1-1913655[online], 22 November 2019, [retrieval date 04 August 2020], Internet<URL:https://www.3gpp.org/ftp/tsg_ran/WG1_RL1/TSGR1_99/Docs/R1-1913655.zip>, pp. 45-46, in particular, section 6.1.1.1 | 1, 5-6 |
| Y | in particular, section 6.1.1.1 | 3-4 |
| A | in particular, section 6.1.1.1 | 2 |
| Y | HUAWEI, HISILICON, "Enhancements on multi-beam operation", 3GPP TSG RAN WG1 #99 R1-1911903[online], 22 November 2019, [retrieval date 04 August 2020], Internet<URL:https://www.3gpp.org/ftp/tsg_ran/WG1_RL1/TSGR1_99/Docs/R1-1911903.zip>, in particular, section 2.2 | 3-4 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 August 2020 (04.08.2020) | 11 August 2020 (11.08.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/002636

C (Continuation). DOCUMENTS CONSIDERED TO BE RELEVANT

| Category* | Citation of document, with indication, where appropriate, of the relevant passages | Relevant to claim No. |
|---|---|---|
| Y | APPLE INC., "Remaining Issues on Multi-beam operation", 3GPP TSG RAN WG1 #99 R1-1912824[online], 22 November 2019, [retrieval date 04 August 2020], Internet<URL:https://www.3gpp.org/ftp/tsg_ran/WG1_RL1/TSGR1_99/Docs/R1-1912824.zip>, in particular, section 2.2 | 4 |
| A | CATT, "Power saving scheme with UE adaptation to maximum MIMO layer", 3GPP TSG RAN WG1 #98b R1-1910355[online], 20 October 2019, [retrieval date 04 August 2020], Internet<URL:https://www.3gpp.org/ftp/tsg_ran/WG1_RL1/TSGR1_98b/Docs/R1-1910355.zip>, entire text | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010